# EUROPÄISCHE PATENTSCHRIFT

(11) **EP 1 757 672 B1**
(45) Veröffentlichungstag und Bekanntmachung des Hinweises auf die Patenterteilung: **15.02.2012**
(21) Anmeldenummer: 06017617.9
(22) Anmeldetag: 24.08.2006
(51) Int. Cl.: C10C 3/00, C10C 3/08, B29B 17/02, B03B 9/02

(54) **Verfahren zur Aufbereitung von bituminösem Verbundwerkstoff**
Process for treating bituminous composite material
Procédé pour traiter de matériau composite bitumineux

(30) Priorität: 24.08.2005 DE 102005040244
(43) Veröffentlichungstag der Anmeldung: 28.02.2007
(73) Patentinhaber: C. Hasse & Sohn Dachbaustoffwerk Uelzen Inh. E. Rädecke GmbH & Co., 29525 Uelzen (DE)
(72) Erfinder: Rädecke, Christoph, 29525 Uelzen (DE)
(74) Vertreter: Kossak, Sabine

(56) Entgegenhaltungen:
- WO-A-86/03134
- DD-A1- 264 016
- US-A- 4 222 851

## Beschreibung

Gegenstand der Erfindung ist ein Verfahren zum Recycling von bitumenhaltigen Reststoffen, bei dem die Bitumenbahnen und Baustellenabfälle zerkleinert oder unzerkleinert dem Recycling-Verfahren zugegeben werden können.

Bei der Sanierung von Altbauten und der Neudeckung von Dächern, insbesondere Flachdächern, entstehen große Mengen von Baustellenabfällen aus dem Dachbereich. Diese Baustellenabfälle enthalten insbesondere die Bitumenbahnen sowie die daran anhaftenden Dämmstoffe aus Kunststoff insbesondere aus Polystyrol. Daneben kommen in den Abfällen mineralische und organische Dämmstoffe, wie Mineralfaser, Schaumglas, Kork, Zellulose vor. Diese Abrissreste dürfen auf Grund aktueller Verordnungen nicht mehr deponiert werden, sondern müssen einer entsprechenden Verwertung zugeführt werden.

Häufig werden diese Reststoffe einfach der Müllverbrennung oder, je nach Zusammensetzung, einer Sonderverbrennung zugeführt. Ebenso entstehen-bei der Fertigung von Bitumenbahnen Reste und Produktionsausschüsse, die ebenfalls entsorgt werden müssen.

Es gibt daher verschiedene Ansätze, die kostspielige Entsorgung zu vermeiden und Verfahren zu entwickeln, die eine Aufarbeitung von Reststoffen bituminöser Dichtungsmaterialien erlauben. Die bekannten Verfahren umfassen dabei üblicherweise folgende Schritte:
- mechanische Zerkleinerung der Dachbahnenreste unter Zugabe eines Trennmittels (Kalksteinmehl),
- Aufweichen der Schnipsel in einer Bitumenvorlage,
- Auflösen dieser Mischung unter Rühren und
- Zerkleinerung der Mischung im Hochschermischer mit dem Ziel der Homogenisierung.

Die in der Mischung enthaltenen Mineralstoffe aus Bestreuung, Füllstoffen und Trennmitteln sowie die mineralischen und metallischen Einlagen nutzen die Mahlwerkzeuge im Hochschermischer in kurzer Zeit ab und erfordern daher einen regelmäßigen Werkzeugwechsel, was zu erheblichen Kosten führt. Zusätzliche Kosten entstehen bei der mechanischen Zerkleinerung der Dachbahnreste, wobei auch hier ein häufiger Werkzeugwechsel notwendig ist. Außerdem findet keine Trennung der Bestandteile des Ausgangsmaterials statt, so daß die erhaltene Masse von geringwertiger Qualität ist.

Ein solches Verfahren zum Aufarbeiten von bitumenhaltigen Reststoffen ist aus der EP 0 583 553 B1 bekannt. In dem beschriebenen Verfahren werden die Dachabdichtungen zunächst zerschnitten, abgeschält und in Stücke von 6-20mm Größe zerkleinert. Das so gewonnene Granulat wird durch Windsichten in zwei Fraktionen aufgeteilt und die bituminöse Fraktion wird unter Zusatz von Füllstoffen in einer Mühle aufgemahlen. Auch hier ist wieder eine mechanische Vorzerkleinerung notwendig, sowie eine mechanische Aufbereitung der erhaltenen Mischung, bei der ebenfalls wieder ein hoher Werkzeugverschleiß entsteht.

Ein weiteres Verfahren zur Rückgewinnung von Teer- oder Bitumenfraktionen ist aus der DD 264 016 A1 bekannt. Dabei werden in einer extraktiven Destillation verschiedene Lösungsmittel eingesetzt, die es erlauben, Bestandteile des Bitumens anzulösen oder aufzuschmelzen. Die Mischung aus gelöstem und angeschmolzenem Bitumen sammelt sich im Sumpf der Destillationsapparatur und muss zur weiteren Verwendung aufgearbeitet werden. Die verwendete extraktive Destillation hat dabei den Nachteil, dass sie großtechnisch unter hohem Regelungsaufwand betrieben werden kann und lediglich geringe Ausbeuten von unter 50% erreicht werden.

Aufgabe der vorliegenden Erfindung ist es daher, ein Verfahren zum Recycling von bitumenhaltigen Dachbahnen bereitzustellen, das ein kostengünstige und effektive Aufarbeitung der bitumenhaltigen Reste erlaubt, möglichst ohne eine mechanische Vorzerkleinerung und ohne einen weiteren mechanischen Mahl- oder Zerkleinerungsschritt. Weiterhin ist es Aufgabe der Erfindung ein Bitumenrecyclat von besserer Qualität zu gewinnen als bislang erzielbar, indem die Bestandteile des Ausgangsmaterials so weit als möglich voneinander getrennt werden.

Die Aufgabe wird erfindungsgemäß gelöst durch ein Verfahren zum Recycling von bitumenhaltigen Reststoffen, durch Trennen der Inhaltstoffe des Abfalls/Einsatzmaterials/Rohstoffs, umfassend die Schritte:
(A) die Bitumenbahnen und/oder bitumenhaltigen Baustellenabfälle werden, ggf. unzerkleinert (ohne mechanische Vorzerkleinerung), mit einer polaren Flüssigkeit, in der sich das Bitumen im Wesentlichen nicht löst (Schmelzdichte-Verfahren), in einen Reaktor gegeben,
(B) die Komponenten aus Schritt (A) werden gemeinsam in dem Reaktor auf Temperaturen oberhalb des Schmelzpunktes von Bitumen von 140 bis 220°C erhitzt und miteinander vermischt, wobei sich die Mischung während des Misch/Rührvorgang in mindestens zwei Fraktionen auftrennt und
(C) die Fraktionen werden, vorzugsweise batchweise oder kontinuierlich, getrennt entnommen.

Weitere Ausführungsformen sind Gegenstand der Unteransprüche oder nachfolgend beschrieben.

Die entstandenen Fraktionen können nach der Entnahme ggf. unter nochmaliger Reinigung getrocknet werden und dann der gewünschten Verwertung zugeführt werden. Es entstehen abhängig vom Einsatzmaterial insbesondere die Fraktionen
- Fraktion I: Bitumenrohstoff,
- Fraktion II; Einlage,
- Fraktion III: Füllstoffe,
- Fraktion IV: Bestreuung, und
- Fraktion V: Folien, Vliese und Dämmstoffe.

Bei der Einlage gemäß Fraktion 11 handelt es sich um z.B. Polyestervlies, Glasvlies, Glasgewebe, Rohfilzpappe, Aluminiumband, Kombinationsmaterialien und/oder Kupferband. Die Fraktion II ist während des gesamten Verfahrens fest und verbleibt am Ende des Trennverfahrens als Feststoff am Reaktorboden bzw. bei Verwendung eines Siebtrommelreaktors im Sieb der Trommel.

Die Fraktion III, Füllstoffe, sind beispielsweise Steinmehle oder Flugasche. Diese lassen sich nach dem Schmelzdichte-Verfahren nicht von Bitumenrohstoff abtrennen, sondern verbleiben überwiegend in der Bitumenrohmasse und schwimmen zusammen mit dieser auf.

Die Fraktion IV, Bestreuung, umfasst Stoffe wie Schieferplättchen, Sand, Kies oder Talkum. Diese sinken im Laufe des Verfahrens, unabhängig von der eingesetzten Verfahrensvariante, zu Boden.

Die Fraktion V umfasst Folien und Vliese wie z.B. Kaschierfolie oder Kaschiervlies und Dämmstoffe, wie z.B. Mineralfaser. In Abhängigkeit vom eingesetzten Verfahren verbleibt die Fraktion V als Feststoff am Reaktorboden oder reichert sich als Schmelze im Bitumenrohstoff an.

Schritt (B) des erfindungsgemäßen Verfahrens kann in Form des Schmelzdichte-Verfahrens durchgeführt werden.
Beim Schmelzdichte-Verfahren werden erfindungsgemäß als Flüssigkeit bzw. Wärmeträgermedien (Lösemittel) in Schritt (A) hochsiedende polare Flüssigkeiten vorzugsweise organische, insbesondere Glykole, Glycerine oder deren Homologe, vorzugsweise Ethylenglykol, Glycerin, 2-Methoxy-ethanol, 1,2-Propandiol oder 1,3-Propandiol, besonders bevorzugt Ethylenglykol eingesetzt. Diese Mischung wird im Schritt (B) auf Temperaturen oberhalb des Schmelzpunktes von Bitumen auf 140-200°C, in Ausnahmefällen auch darüber, vorzugsweise auf 180°C erhitzt.

In einer weiteren Ausführungsform des Schmelzdichte-Verfahrens können als Flüssigkeiten oder Wärmeträgermedien (Lösemittel) in Schritt (A) niedrigsiedende polare Flüssigkeiten, vorzugsweise Wasser, eingesetzt werden und das Verfahren wird dann vorzugsweise in einem Druckbehälter unter erhöhtem Druck bei Temperaturen oberhalb des Schmelzpunktes von Bitumen von 140-220°C durchgeführt, in seltenen Fällen auch bei höheren Temperaturen.

Die Temperatur sollte in der Regel während des Verfahrens 220°C nicht überschreiten, da ab dieser Temperatur einzelne Bestandteile der Mischung sich zu zersetzen beginnen. Vorzugsweise wird das Verfahren bei Temperaturen über 180°C durchgeführt, in jedem Fall aber oberhalb der Erweichungstemperatur des Bitumens. Die Temperatur ist ein wichtiger Verfahrensparameter. Wenn die Temperatur nicht hoch genug ist, verflüssigt sich das Bitumen nicht ausreichend, um sich von den anhaftenden Resten zu lösen und auf dem Lösemittel aufzuschwimmen.

Je nach Beschaffenheit der bituminösen Reststoffe kann ein bituminöser Rückstand erhalten werden, der bestimmungsgemäß bei einem Lösemittelgehalt von 10 bis 70 Gew.-%, vorzugsweise 30 bis 40 Gew.-%, als Vor- oder Deckanstrich genutzt werden kann, ohne dass weitere Aufarbeitungsschritte notwendig sind, oder durch Zugabe weiterer Bestandteile zu Spezialanstrichen oder Massen weiterverarbeitet werden kann.

Die Vermischung im Schritt (B) kann vorzugsweise mit einem Rührwerk unter Rühren, in einem Siebtrommelreaktor durch Umwälzen, in einem Mischbehälter oder durch Ultraschall erfolgen.

Überraschenderweise können bei dem erfindungsgemäßen Verfahren die Bitumenbahnen und die bitumenhaltigen Baustellenabfälle nicht nur zerkleinert, sondern auch direkt in der Größe, in der sie von der jeweiligen Baustelle bzw. Produktionsstätte angeliefert werden, dem Aufarbeitungsverfahren zugeführt werden, ohne dass ein mechanischer Vorzerkleinerungsschritt notwendig ist. Dieses führt sowohl zu einer Zeitersparnis als auch zu einer erheblichen Kostenersparnis. Auf die werkzeugintensive Vorzerkleinerung kann verzichtet werden und ebenso kann auf ein mineralisches Trennmittel, wie z.B. Talkum oder Kalksteinmehl, die üblicherweise den Reststoffen zugesetzt werden, um ein Verkleben der Schneidwerkzeuge zu verhindern, verzichtet werden. Der Zusatz des Trennmittels führt durch den erhöhten mineralischen Gehalt häufig zu einem noch schnelleren Verschleiß der Schneidwerkzeuge.

Erfindungsgemäß können die Bitumenbahnen, die als Produktionsausschuss aus der laufenden Fertigung stammen, in Stücke, die üblicherweise eine Größe von ca. 1-3m² haben, oder sogar in ganzen Rollen ohne Vorzerkleinerung in den Reaktor gegeben werden. Ebenso können die Baustellenabfälle, bei denen es sich üblicherweise um Abrissmaterial aus Bitumenbahnen in Stücken von ca. 2m² Größe handelt, ohne weitere Vorzerkleinerungen in den Reaktor gegeben werden. Bei den bisherigen Verfahren werden z.B. Stücke von 100 cm x 30 cm x 30 cm angenommen und dann vor dem eigentlichen Recyclingschritt mechanisch zerkleinert, beispielsweise geschreddert. An diesen Bitumenbahnen aus Abriss haften häufig noch weitere Dämmstoffe aus Kunststoff insbesondere Polystyrol, die ebenfalls mit in den Reaktor gegeben werden können. Die weiteren im Dach befindlichen Stoffe, wie mineralische oder organische Dämmstoffe, sowie die Bahnen aus anderen Materialien werden vorteilhafterweise bereits beim Abriss abgetrennt. Hierbei handelt es sich um eine übliche Praxis, die auch bei den herkömmlichen Recyclingverfahren so eingesetzt wurde.

Dieses bitumenhaltige Stoffgemisch aus Bitumenbahnen und ggf. Baustellenabfällen oder die vorzerkleinerten Reste werden unbehandelt dem Reaktor zugeführt und hier mit einer Flüssigkeit gemischt. Die eingesetzte polare Flüssigkeit dient lediglich als Energieüberträger (Wärmeträgermedium) zum Beheizen des Bitumens, da sich das Bitumen in der Flüssigkeit nicht löst. Aufgrund des Dichteunterschiedes zwischen der polaren Flüssigkeit und dem Bitumenrohstoff erfolgt eine Trennung der flüssigen Bestandteile und die Fraktionen können dem Reaktor getrennt entnommen werden. Beim Schmelzdichteverfahren erfolgt die Auftrennung somit durch das Verflüssigen des Bitumen und das Absinken oder Aufschwimmen der Bestandteile rein physikalisch. Daher ist der erhaltene Bitumenanteil nach dem Recycling mit über 60 %, erreicht werden bis über 90 %, bezogen auf den Gehalt an eingesetztem Bitumen relativ hoch und von guter Qualität. Über das Schmelzdichteverfahren können Bitumen erhalten werden, deren Erweichungspunkt nur etwas 2 - 3 K von dem eingesetzten Bitumen abweicht.

Das Vermischen der Komponenten gemäß Schritt (B) kann auf verschiedene Weise erfolgen:
1. Der Reaktor, in dem der Prozess abläuft, kann beispielsweise ein Siebtrommelreaktor sein, der mit großdimensionierten Mitnehmern versehen ist. Während des Prozesses werden die Komponenten dadurch bewegt und umgewälzt.
2. Es kann sich auch um einen herkömmlichen Reaktor mit einem Rührwerk handeln, das die Komponenten horizontal und/oder vertikal bewegt und umwälzt, z.B. durch langsam laufende Rührarme.
3. Grundsätzlich ist jeder Reaktor für das Verfahren geeignet, bei dem die Komponenten während des Verfahrens in Bewegung gehalten und umgewälzt werden, um den Trennprozess zu ermöglichen bzw. zu unterstützen, hierfür kommen alle üblichen Mischbehälter in Frage.

Die Misch- oder Rührbewegung darf dabei nicht zu stark sein. Der Bitumenrohstoff, der sich von den Resten gelöst hat, muss aufschwimmen können. Bei einer zu starken Rührbewegung wird das Bitumen immer wieder untergemischt und kann nicht zur Oberfläche aufsteigen. Vorzugsweise wird das erfindungsgemäße Verfahren in einem Siebtrommelreaktor durchgeführt, um eine gute, aber nicht zu starke Durchmischung zu erzielen.

Der Reaktorinhalt kann während des Verfahrens zusätzlich mit Ultraschall angeregt werden. Durch den Einsatz des Ultraschalls wird die physikalische Trennung von verflüssigtem Bitumen und den festen Bestandteilen erleichtert. Während des Misch/Rührvorgangs gemäß Schritt (B) trennen sich die Fraktionen weitgehend voneinander. Nach Ende des Rühr/Mischvorgangs bzw. während des Rühr/Mischvorgangs entmischen sich die getrennten Bestandteile in unterschiedliche Phasen und können dann aus dem Reaktor fraktioniert entnommen werden (Schritt C). So können beispielsweise die Feststoffe durch ein Sieb abgetrennt werden und die flüssigen Stoffe abgeskimmt werden. Als nicht lösliche, feste Bestandteile erhält man die Füllstoffe und die Bestreuung, sowie die Einlage.

Die Entnahme der Fraktionen kann auch kontinuierlich während des Verfahrens erfolgen. Die flüssigen Bestandteile trennen sich bereits im Reaktor in unterschiedliche Phasen und können ständig aus dem Reaktor fraktioniert entnommen werden. Entsprechend können die Feststoffe kontinuierlich ausgeräumt oder in regelmäßigen Abständen dem Reaktor entnommen werden, z.B. durch Durchleitung durch ein Sieb, Ausheben eines Siebeinsatzes und Ausräumen.

Der erhaltene Bitumenrohstoff kann im Wasserbad gereinigt und anschließend getrocknet werden, wobei das Restwasser verdunstet. Die Feststoffe können z.B. durch Nasssiebung getrennt und anschließend getrocknet werden. Sofern mit organischen Lösemitteln gearbeitet wurde, können die Bitumenrohstoffe unter Wärme von den Lösemittelresten befreit werden, die abdampfen. Ebenso können die Feststoffe durch Wärmebehandlung von Lösemittelresten befreit werden.

Die aufgetrennten Fraktionen können unterschiedlicher Verwertung zugeführt werden. Die Füllstoffe, wie Kalksteinmehl, Flugasche o.ä. können wiederverwendet werden. Die Bestreuung kann im Landschaftsbau eingesetzt werden. Die polare Flüssigkeit kann in den Prozess zurückgeführt und wiederverwendet werden. Lediglich die Einlage muss entsorgt werden bzw. dem Downcycling zugeführt werden. Das so erhaltene Bitumen (Bitumenrohstoff) kann wiederverwendet werden, vorzugsweise z.B. für die Herstellung neuer Dachbahnen, oder weiterverwendet werden, z.B. als Teilstrom für schweres Heizöl bei der Prozessenergieerzeugung.

Das erfindungsgemäße Verfahren hat somit den Vorteil, dass ein Bitumenrohstoff von vergleichsweise höherer Qualität erhalten wird und die aufgetrennten Reststoffe weitestgehend wieder verwendet werden können. Eine teure Entsorgung durch Müllverbrennung oder als Sondermüll kann somit entfallen. Neben der Einsparung der Kosten für die Entsorgung können zusätzlich Einnahmen bzw. Ersparnisse für die wieder verwendbaren Rohstoffe aus dem erfindungsgemäßen Verfahren erzielt werden. Durch die höherwertige Qualität des erhaltenen Bitumens kann bei der Herstellung z.B. von Dachbahnen zudem weiterer Rohstoff eingespart werden. Das erfindungsgemäße Verfahren ist somit deutlich wirtschaftlicher als bisher bekannte Entsorgungsmethoden oder Recyclingverfahren. Insbesondere wenn die Reststoffe unzerkleinert eingesetzt werden und hierdurch ein weiterer Verfahrensschritt eingespart werden kann, ist das erfindungsgemäße Verfahren besonders kostengünstig zu betrachten.

Der Ablauf des Verfahrens wird anhand von Beispielen näher beschrieben, ohne das Verfahren auf diese zu beschränken.

### Beispiel 1 (Schmelzdichte-Verfahren)

In einem Reaktor wurden Dachbahnenreste aus Produktionsabfällen (100 % Schweißbitumenbahn, Erweichungspunkt 98°C) bis ca. 75% des Reaktorvolumens (unverdichtet) in einen geschlossenen Siebbehälter gegeben. Der Reaktor wurde mit Glycerin gefüllt. Der Siebbehälter wurde im Reaktor so positioniert, dass er sich stets unterhalb des Flüssigkeitsspiegels befand. Der Reaktor wurde 4 Stunden lang auf 180 bis 210°C erwärmt. Die Temperatur des Glycerinbades schwankte während der gesamten Verfahrenszeit in diesen Temperaturbereich. Unter leichtem Rühren wurde das sich auf der Flüssigkeitsoberfläche schwimmende Bitumen abgeskimmt, in Wasser gewaschen und anschließend getrocknet. Der abgeskimmte Bitumenrohstoff wurde als Schmelze vereinigt. Anschließend wurde der Erweichungspunkt bestimmt. Die Reststoffe in der Siebtrommel (Einlagen) und am Reaktorboden (mineralische Betreuung) wurden nach Entfernen des Glycerins mit Wasser gewaschen und der Verwertung zugeführt.

Es ergab sich eine Ausbeute von 98 Gew.-% Bitumenrohstoff mit Füllstoffen bezogen auf den rechnerischen Anteil an der Einwaage Dachbahnreste. Der gewonnene Bitumenrohstoff hatte einen Erweichungspunkt von 96°C. Die fehlenden 2 Gew.-% ergeben sich durch Bitumenreste, die an den Gerätschaften haften belieben und daher nicht ausgetragen wurden.

### Beispiel 2

Das Recyclingverfahren wurde entsprechend Beispiel 1 durchgeführt, wobei der Reaktor mit einem Material aus 50 Gew.-% Schweißbitumenbahnen (Erweichungspunkt 98°C) und 50 Gew.-% Elastomerbitumenbahnen (Erweichungspunkt 125°C) gefüllt wurde. Nach 4 Stunden Verfahrensdauer bei einer Temperatur von 180 bis 210°C betrug die Ausbeute an Bitumenrohstoff 92 Gew.-% (bezogen auf den rechnerischen Bitumenanteil der Einwaage) und das erhaltene Bitumen hatte einen Erweichungspunkt von 112°C.

## Patentansprüche

1. Verfahren zum Recycling von bitumenhaltigen Reststoffen, durch Trennen der Inhaltstoffe des Einsatzmaterials, umfassend die Schritte:
(A) die Bitumenreststoffe und/oder bitumenhaltigen Baustellenabfälle werden mit polarer Flüssigkeit, in der sich das Bitumen nicht löst, in einen Reaktor gegeben,
(B) die Komponenten aus Schritt (A) werden gemeinsam in dem Reaktor auf Temperaturen oberhalb des Schmelzpunktes von Bitumen von 140 bis 220 °C erhitzt und miteinander vermischt, wobei die Mischung sich während des Misch/Rührvorgang in mindestens zwei Fraktionen auftrennt und
(C) die Fraktionen werden dem Reaktor getrennt entnommen.

2. Verfahren gemäß Anspruch 1, **dadurch gekennzeichnet, dass** in Schritt (A) die Bitumenreststoffe und/oder bitumenhaltigen Baustellenabfälle unzerkleinert bzw. ohne mechanische Vorzerkleinerung eingesetzt werden.

3. Verfahren gemäß einem der Ansprüche 1 oder 2, **dadurch gekennzeichnet, dass** in einem weiteren Verfahrensschritt
(D) die entnommenen Fraktionen einzeln ggf. gereinigt und getrocknet werden.

4. Verfahren gemäß einem der Ansprüche 1 bis 3, **dadurch gekennzeichnet, dass** in Schritt (C) zumindest folgende Fraktionen entstehen: Bitumenrohstoff, Einlage, Füllstoff, Bestreuung und ggf. Folie oder Vlies.

5. Verfahren gemäß einem der Ansprüche 1 bis 4, **dadurch gekennzeichnet, dass** als Flüssigkeit hochsiedende polare Flüssigkeiten, insbesondere Glykole, Glycerine oder deren Homologe, besonders Etylenglykol, eingesetzt werden.

6. Verfahren gemäß Anspruch 5, **dadurch gekennzeichnet, dass** die Mischung in Schritt (B) auf eine Temperatur von 180°C erhitzt wird.

7. Verfahren gemäß einem der Ansprüche 1 bis 4, **dadurch gekennzeichnet, dass** als Flüssigkeit niedrigsiedende polare Flüssigkeiten, vorzugsweise Wasser, eingesetzt werden und das Verfahren unter erhöhten Druck in einem Druckbehälter durchgeführt wird

8. Verfahren gemäß einem der Ansprüche 1 bis 7, **dadurch gekennzeichnet, dass** die Vermischung in Schritt (B) mit
- einem Rührwerk unter Rühren,
- in einem Siebtrommelreaktor durch Umwälzen
- in einem Mischbehälter oder/und
- durch Ultraschall erfolgt.

## Claims

1. Method for recycling bituminous residues, separating the ingredients of the feedstock, comprising the following steps:
(A) the bituminous residues and/or bituminous construction waste are introduced into a reactor together with polar liquid in which the bitumen does not dissolve,
(B) the components from step (A) are heated together in the reactor to temperatures above the melting point of bitumen of 140 to 220°C and mixed with one another, the mixture separating into at least two fractions during the mixing/stirring process, and
(C) the fractions are extracted separately from the reactor.

2. Method according to claim 1, **characterised in that** the bituminous residues and/or bituminous construction waste used in step (A) have hot been comminuted or mechanically crushed.

3. Method according to either claim 1 or claim 2, **characterised in that** the extracted fractions are optionally purified and dried separately in a further method step (D).

4. Method according to any one of claims 1 to 3, **characterised in that** at least the following fractions are formed during step (C): raw bituminous material, intermediate layer, filler, grit, and optionally film or mat.

5. Method according to any one of claims 1 to 4, **characterised in that** high-boiling polar liquids, in particular glycols, glycerines or homologues thereof, in particular ethylene glycol, are used as the liquid.

6. Method according to claim 5, **characterised in that** the mixture is heated to a temperature of 180°C in step (B).

7. Method according to any one of claims 1 to 4, **characterised in that** low-boiling polar liquids, preferably water, are used as the liquid, and the method is carried out under elevated pressure in a pressure tank.

8. Method according to many one of claims 1 to 7, **characterised in that** the mixing in step (B) is carried out
- by stirring in a stirring device
- by circulation in a sieve drum reactor
- in a mixing tank or/and
- by ultrasound.

## Revendications

1. Procédé de recyclage de résidus contenant du bitume, par séparation des matières contenues dans le matériau de départ, lequel procédé comporte les étapes suivantes :
A) introduire dans un réacteur des résidus de bitume et/ou des rebuts de matériaux de construction contenant du bitume, avec un liquide polaire dans lequel le bitume n'est pas soluble ;
B) chauffer ensemble, dans le réacteur, les composants introduits dans l'étape (A), à une température supérieure au point de fusion du bitume, de 140 à 220 °C, et les brasser les uns avec les autres, brassage au cours duquel le mélange se sépare en au moins deux fractions ;
C) et retirer séparément ces fractions du réacteur.

2. Procédé conforme à la revendication 1, **caractérisé en ce que** dans l'étape (A), c'est à l'état non fragmenté ou sans broyage mécanique préalable que l'on utilise les résidus de bitume et/ou les rebuts de matériaux de construction contenant du bitume.

3. Procédé conforme à la revendication 1 ou 2, **caractérisé en ce que**, dans une étape de procédé supplémentaire (D), on opère séparément, le cas échéant, une purification et un séchage des fractions retirées du réacteur.

4. Procédé conforme à l'une des revendications 1 à 3, **caractérisé en ce qu'**il se forme, dans l'étape (C), au moins les fractions suivantes : produit brut bitumineux, dépôts, charges, poudres, et le cas échéant, feuilles ou voiles.

5. Procédé conforme à l'une des revendications 1 à 4, **caractérisé en ce que** l'on utilise, en tant que liquide, des liquides polaires à haut point d'ébullition, en particulier des glycols, du glycérol ou leurs homologues, et plus spécialement de l'éthylèneglycol.

6. Procédé conforme à la revendication 5, **caractérisé en ce que** dans l'étape (B), on chauffe le mélange à une température de 180 °C.

7. Procédé conforme à l'une des revendications 1 à 4, **caractérisé en ce que** l'on utilise, en tant que liquide, des liquides polaires à bas point d'ébullition, de préférence de l'eau, et **en ce que** l'on met en oeuvre le procédé sous pression élevée, dans une cuve à pression.

8. Procédé conforme à l'une des revendications 1 à 7, **caractérisé en ce que** dans l'étape (B), on réalise l'opération de mélange
- en brassant le tout au moyen d'un agitateur,
- dans un réacteur à tambour et crible, en faisant tourner celui-ci,
- dans une cuve mélangeuse,
- et/ou au moyen d'ultra-sons.
